# EUROPEAN PATENT SPECIFICATION

(11) **EP 3 533 093 B1**
(45) Date of publication and mention of the grant of the patent: **13.12.2023**
(21) Application number: 16805730.5
(22) Date of filing: 26.10.2016
(51) Int. Cl.: H01M 50/30, H01M 50/308

(54) **A DOUBLE-CHAMBER BATTERY VENTING SYSTEM**
DOPPELKAMMER-BATTERIEENTLÜFTUNGSSYSTEM
SYSTÈME DE VENTILATION DE BATTERIE À DOUBLE CHAMBRE

(43) Date of publication of application: 04.09.2019
(73) Proprietor: Abertax Research & Development Ltd., PLA 3000 Paola (MT)
(72) Inventor: MERZ, Klaus-Dieter, 63654 Büdingen (DE); CILIA, Joseph, Haz Zebbug ZBG 1921 (MT); FARRUGIA, Aaron, Bubaqra Iz-Zurrieq ZRQ 2500 (MT); TABONE, Malcolm, Hal Qormi QRM 3612 (MT); SCHEMBRI, George, Birkirkara BKR 1262 (MT)
(74) Representative: Diehl & Partner
(86) International application number: PCT/EP2016/075870
(87) International publication number: WO 2018/077407

(56) References cited:
- JP-A- 2014 197 512

## Description

### Field

The present invention relates to batteries in general and to valve regulated lead acid batteries in particular.

### Background

Lead-acid batteries are composed of individual cells. Each cell comprises two flat lead electrodes immersed in a sulfuric acid containing electrolyte. In the charged state, the surface of the positive electrode is covered with lead oxide and the negative electrode consists of lead. In the discharged state, lead sulfate deposits on both electrode surfaces. Upon discharging, the cell's lead electrodes undergo a chemical reaction producing lead sulfate and water, and when charged, the lead sulfate and water will be converted back into lead and sulfuric acid according to the overall reaction:

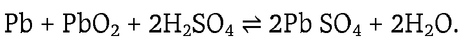

A lead-acid battery generally has an acid-proof battery case wherein several compartments for receiving the individual cells isolated from each other are formed. Cell connectors connect the electrode pairs in series resulting in the nominal voltage of the battery being a multiple of the nominal voltage of each cell, i.e. a multiple of 2 V. When using high currents for recharging a lead-acid battery, not all of the energy is utilized for the conversion of lead sulfate and water into lead and acid. Some of the energy fed into the cells will result in an electrolytic reaction decomposing water into hydrogen and oxygen.

In valve regulated lead acid batteries, each cell is sealed so that in normal operation these gases are kept inside the respective cell, allowing the gases to recombine. To prevent the electrolytic reaction from building up pressures beyond safe levels, each cell is equipped with a check valve operating as safety valve that opens when the cell's internal pressure exceeds a certain level. The open valve allows excess gases to escape from the cell thereby restoring a safe pressure level inside the respective cell. The check valves are configured as one-way valves that allow fluid to flow only from the inside to the outside of a cell.

Gases discharged through the check valves are, however, no longer available inside the cells for recombining back to water so the electrolyte gets dryer. Valve regulated lead acid batteries are therefore known to age by "drying-out". The check valves usually open when the pressure difference between the inside and the outside of a cell reaches a trigger threshold. The trigger threshold, however, varies from check valve to check valve resulting in an uneven drying-out of the battery cells. Under normal operating conditions, some cells will therefore loose more gas than other cells, whereby the cell with the highest gassing rate defines the life expectancy of the battery.

JP 2014-197 512 A discloses a power storage device including a plurality of power storage elements and an outer covering body which forms an inner space in a sealed state and houses the power storage elements in the inner space. The outer covering body includes an opening part for linking the inner space to an outer space and an umbrella valve. The umbrella valve performs pressure control to put the pressure in the inner space close to the pressure in the outer space. This is performed by linking the inner space to the outer space through the opening part when the pressure in the inner space rises above the pressure outside the outer covering body, and by placing the inner space in the sealed state by closing the opening part when the pressure in the inner space does not rise above the pressure in the outer space. The umbrella valve is of a restoration type, thus capable of performing the pressure control a plurality of times. The document discloses features of the preamble of independent claim 1.

To overcome this problem it is known to provide a valve regulated lead acid battery with a gas collecting chamber, into which all check valves of the battery discharge (see e.g. German patent application No. 10 2011 054 775 A1). A calibrated one-way valve seals the gas collecting chamber from the outside of the battery to ensure an above ambient pressure at the discharge side of the check valves before gases are allowed to escape to the outside of the battery. The gas collecting chamber thus operates as a gas equalization chamber making sure that the loss of water in the cells is approximately uniform. Although the gas collecting chamber equalizes the excess gas pressure, the check valves cannot be dispensed with, since they prevent oxygen generated in one cell flowing into another cell where it would oxidize the other cell's negative electrode and thus shorten the battery's life expectancy. Further, the check valves are still needed for preventing any flow of an electrolyte's components from one cell to another.

However, there is still a problem that electrolyte components, and in particular acid, having escaped the battery cells along with the gases will also escape the gas collection chamber through the calibrated one-way valve as well as through bypassing faulty or damaged seals of the valves, posing a hazard to persons and facilities in the vicinity of the battery. Electrolyte components accumulating at the surface of the battery may form electrical contact between the poles of the battery, cause corrosion of nearby objects and acid burns on people. Moreover, leaking gases bypassing the valves through faulty or damaged seals also present a bigger risk of explosion.

It is therefore an object of the present invention to provide a valve regulated battery, like for instance a lead acid battery with a battery cell venting system preventing electrolyte components or gases from escaping the battery.

### Summary of the invention

The object is achieved by the invention as defined in the independent claims. Further preferred embodiments are the subject of dependent claims.

A respectively improved battery system comprises a battery and a battery venting system. The battery comprises a case providing several compartments with each compartment housing two electrodes immersed in an electrolyte to form a battery cell. The battery venting system comprises at least one check valve for each cell of the battery, a first chamber enclosing a first volume, a calibrated one-way valve, and a second chamber enclosing a second volume, whereby the second volume is separated from the first volume by a separating wall common to the first and second chambers. Each check valve of the venting system is provided a between its respective battery cell and the first volume to enable a fluid communication between the respective cell and the first volume when open, and to seal the respective battery cell when closed. The calibrated one-way valve is positioned in the separating wall for providing a fluid communication between the first volume and the second volume when open, and for sealing the first volume from the second volume when closed. The first chamber is continuously bonded to the case of the battery such that the first volume is hermetically sealed, when the check valves and the calibrated one-way valve are closed. The second chamber has an outlet opening providing a fluid communication from the second volume to the surrounding of both, the battery venting system and the battery, with the second chamber being continuously bonded to the first chamber for providing, with the exception of the outlet opening, a hermetically sealed encasing for the second volume. The battery venting system is further configured such that the second chamber of the battery venting system is located below the separating wall, and the inlet port of the calibrated one-way valve is located above the surface of the separating wall facing to the first volume.

It should be noted in this context that the terms "including", "comprising", "containing", "having" and "with", as well as grammatical modifications thereof used in this specification or the claims for listing features, are generally to be considered to specify a non-exhaustive listing of features such as method steps, components, ranges, dimensions or the like, and do by no means preclude the presence or addition of one or more other features or groups of other or additional features.

The present invention provides a battery system comprising a battery and an improved battery venting system for batteries, and in particular for lead acid batteries minimizing and even preventing a contamination of a battery's exterior or near surroundings by fluids having escaped from the battery cells into the first chamber. By having the outlet port of the calibrated one-way valve located inside the second volume of the battery venting system, instead of at the outside of the battery, a leaking valve will not result in a contamination of a battery's outside surfaces or a battery's surroundings. The above two chamber system further guarantees that gas escaping from the battery cells is not lost to the outside of the battery, but increases the pressure on the exit side of the check valves thereby equalizing the pressure between the battery cells and reducing the danger of explosion in the battery's vicinity. Only in case of a build-up of dangerous excessive pressure, or a pressure exceeding its set value and the battery box acceptable safe pressure, part of the gas inside the equalizing chamber is let to bleed into the second volume for discharge.

Advantageous embodiments have the outlet opening of the second chamber located above the bottom of the second chamber to further prevent liquids accumulated in the second chamber from being discharged to the exterior of the venting system.

Advantageous embodiments may further have the first chamber being configured as a lid to be attached to the top of the battery in a gas tight manner and to cover at least the area provided for the check valves. Respective embodiments enable a compact integration of the venting system with the battery. Some aspects of such embodiments may have the first chamber configured for being bonded to the top of the battery by gluing or welding.

In particularly preferred embodiments each check valve is biased in the closed position to open only when the pressure on the inlet port of the check valve is higher than on the outlet port of the check valve, and when this pressure difference exceeds a certain value. The check valves preferably close when the pressure difference falls below the certain value. The biasing of the check valves may advantageously be implemented by mechanical, pneumatical or other means.

Embodiments may further be implemented with the first chamber comprising a first section and a second section, whereby the first section is in fluid communication with each check valve, the calibrated one-way valve is located in the second section, and the second section is directly connected to the first section via an opening formed in the first section. According to aspects of the embodiment, the second section is directly connected to the first section by use of a tube or pipe.

Further advantageous embodiments provide a flame arrester positioned in the second chamber between the calibrated one-way valve and the outlet opening such that any fluid passing from the outlet opening to the calibrated one-way valve to the outlet opening has to pass through the flame arrester. A respectively positioned flame arrester allows gases to escape from the second chamber but prevents flames from entering the battery venting system.

Particular advantages embodiments of the invention have the battery system comprise an electronic control device in addition to the battery venting system, the electronic control device comprising a pressure sensor being arranged for sensing a pressure inside the first volume, and the electronic control device being configured to generate a signal for controlling a charging current contingent upon the pressure sensed in the first volume by use of the pressure sensor.

### Short description of the Figures

Further features of the invention will be apparent from the following description of exemplary embodiments together with the claims and the Figures. In the Figures, functionally and/or structurally equivalent components are, as far as possible, identified by identical or similar reference signs. It is noted that the invention is defined by the scope of the claims enclosed and is not limited to the configurations of the exemplary embodiments described herein. Other embodiments of the present invention may implement individual features in different combinations than the examples described below. In the following description of exemplary embodiments, reference is made to the enclosed Figures, of which
- Figure 1: shows a cross section through a lead acid battery provided with a first embodiment of a battery venting system,
- Figure 2: shows a possible design for a check valve to be provided between a battery cell and a gas collecting chamber,
- Figure 3: shows another check valve design, where several check valves share a common closing member,
- Figure 4: shows a design of a system making use of an electronically control device having a pressure sensor in fluid communication with the gas collecting chamber for controlling a charging current contingent upon the pressure in the collecting chamber, and
- Figure 5: shows a cross section through a lead acid battery provided with a second embodiment of a battery venting system.

It is generally to be understood that the Figures show only those components that are necessary for the understanding of the illustrated embodiments. Components necessary for the functioning of the respective embodiments but not necessary for the understanding of the invention have been omitted from the Figures for the sake of clarity.

### Description of preferred embodiments

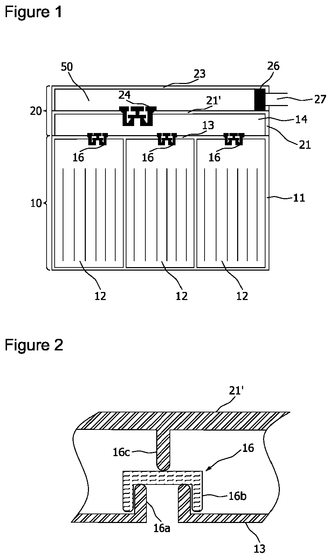

Figure 1 illustrates a cross section through a battery system including a battery 10 and a venting system 20 according to a first embodiment. The battery 10 comprises a case 11 providing several compartments with each compartment housing two electrodes immersed in an electrolyte to form a battery cell 12. The cells 12 are sealed by a top wall 13. The electrodes are fed through the top wall with the electrode pairs then being connected in series (not shown in the Figures). A check valve 16 is placed in the top wall above each battery cell such that fluid may only flow out of the battery cell. The check valves are preferably biased to open only when the pressure inside a battery cell exceeds the pressure outside the battery cell by a certain amount, and to close when the pressure difference falls below that amount. In other words, the check valves are biased to open upon the pressure difference reaching a certain value, whereby the value may in some embodiments range, e.g., from zero to a maximum of 20 mbar. The function of the check valves is therefore that of safety valves as described above, i.e. enabling a discharge of excess gas from a cell but preventing a fluid exchange, i.e. an exchange of gas and/or liquids, between any two cells.

The space above the check valves 16 is covered by a first lid 21 forming together with the top wall 13 a first chamber enclosing a first volume 14. The lid 21 may cover the top surface of the battery 10 totally or only part of it, e.g., a part excluding an area used for the electrode connections. A calibrated one-way valve 24 is placed in the top wall 21' of the first lid 21. The space above the calibrated one-way valve 24 is covered by a second lid 23 that forms together with the top wall 21' of the first lid 21 a second chamber enclosing a second volume 50. The inlet port of the calibrated one-way valve 24 is located in the first volume 14 while the outlet port of the calibrated one-way valve 24 is located in the second volume 50. The calibrated one-way valve 24 is preferably placed in the top wall 21' of the first lid 21, i.e. the separating wall 21' separating the first volume 14 from the second volume 50.

The first chamber is continuously bonded to the case 11 of the battery 10. In the embodiment illustrated in Figure 1, this is achieved by firmly bonding the lid 21 to the top of the battery case 11, i.e. onto the top of the battery case's sidewalls and/or the top wall 13 of the battery 10 such that, when the check valves 16 and the calibrated one-way valve 24 are closed, the first chamber encloses a hermetically sealed first volume 14. The second chamber is, in the embodiment of Figure 1, formed by continuously bonding second lid 23 to the top of the first lid 21 such that, when the calibrated one-way valve 24 is closed and the second chamber would not have the opening 27 described below, the second chamber will enclose a hermetically sealed closed second volume (50). Gases discharged from the cells are collected in the first volume 14 forming a gas collecting chamber. The thus increased pressure in the gas collecting chamber reduces further discharging from those cells having a higher gas escape rate resulting in an equalization of the cell pressures.

The inlet port of the calibrated one-way valve 24 is located at a distance above the bottom of the first chamber, i.e. above the battery's top wall 13 and preferably also above the top surfaces of the check valves 16. The distance between the inlet port of the calibrated one-way valve 24 and the bottom of the first chamber is preferably chosen such that the level of liquids having escaped from the battery cells and accumulated in the first volume during the life span of the battery will not reach the inlet port of the calibrated one-way valve 24. When check valves 16 extending far into the first volume are used, the inlet port of the calibrated one-way valve 24 is preferably placed in a region between the check valves 16. In this case, the inlet port may be positioned near or even below a top surface of a check valve 16 but always above the top wall 13 of the battery 10 and at a distance far enough from the check valves to ensure that liquids present on the check valves will not contaminate the inlet port of the calibrated one-way valve 24.

The second volume 50 is in fluid communication with the surroundings of both the venting system and the battery through an outlet opening 27 formed in the second chamber. To improve the operational safety of the battery venting system 20, a flame arrester 26 covers the outlet opening 27. The flame arrester is permeable to the gases from the battery cells and to air but blocks any flames from entering the second volume 50. When the flame arrester 26 is not directly disposed at the outlet opening 27, it is disposed such that any gases having passed through the calibrated one-way valve 24 have to pass the flame arrestor 26 before being released into the surroundings of the second chamber.

The cross sectional view of Figure 2 illustrates an exemplary configuration of a check valve 16. The check valve 16 comprises a tubular valve body 16a formed integrally with the top wall 13 of the battery case 11. The valve body 16 extends from the top wall 13 into the first volume 14 with its lower opening forming the inlet port and its upper opening being sealed by a cap 16b made from resilient material. A mechanical arrestor 16c presses the cap 16b against the valve seating, i.e. against the edge of the upper opening. The mechanical arrestor 16c may be a protrusion extending from the top wall 21' of the first lid 21 and deforming the cap 16b to the extent necessary for achieving the bias required for obtaining the desired differential opening pressure. The mechanical arrestor may also be formed integrally with the top wall 13 of the battery case 11, e.g. in form of a gallows-like hook. In other embodiments of a check valve, a flat membrane may be used as a closing member instead of a cap 16b.

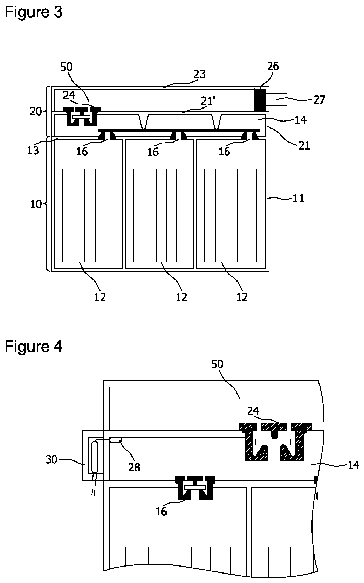

Figure 3 illustrates another check valve design, where several check valves share a common closing member 16b'. The valve bodies are identical to those of the embodiment illustrated in Figure 2. However, there is only one closing member 16b' covering the upper openings of all check valve seats. The closing member may be an elastic membrane of resilient material like, for instance, a rubber flap positioned in the first volume and covering all upper openings of the, e.g. tubular, check valve bodies. The closing member is pressed onto each valve body by means of mechanical arrestors like the ones described with respect to the embodiment illustrated in Figure 2. There is one mechanical arrestor 16c for each check valve body, so that each single battery cell 12 may vent into the first volume 14 while the other cells 12 remain closed.

As shown in Figure 4, the venting system may further comprise an electronic control device 30 operatively coupled to at least one sensor 28 disposed in fluid communication with the first volume. Wires 40 may connect the electronic control device 30 to the battery terminals for being powered. The electronic control device 30 may also be communicatively coupled to a charger control (not shown) for providing the charger control with a signal to reduce the charging current or to interrupt charging when the pressure in the first volume exceeds a certain value or rises too fast. This allows a charge control where the pressure in the equalizing chamber, i.e. in the first volume, can be kept below the value at which the calibrated one-way valve 24 will open to release the gas from the first chamber into the second chamber, thereby preventing unnecessary drying out of the electrolyte.

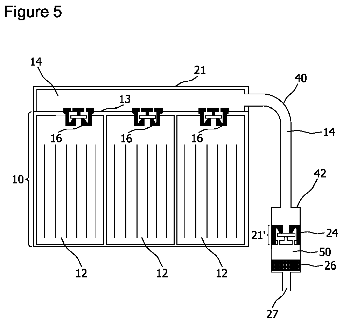

The cross section shown in Figure 5 illustrates a lead acid battery provided with a battery venting system according to a second embodiment. Different to the first embodiment shown in Figure 1, only the first lid 21 is placed on top of the battery 10. A channel, formed e.g. by a tube 40 or pipe 40, connected to a side wall of the first lid 21 provides a fluid communication between the volume enclosed by the first lid 21 and a cartridge 42. A separating wall 21' divides the interior of the cartridge 42 into two separate volumes. The volume enclosed by the first lid 21 and the top wall 13 of the battery 10, the volume enclosed by the tube 40 or pipe 40, and the upper volume of the cartridge together form the first volume 14. The lower volume of the cartridge 42 forms the second volume 50. The walls surrounding the first volume 14 form the first chamber. The calibrated one-way valve 24 is placed upside down in the separating wall 21' in a way that the inlet port of the valve is located above the surface of the separating wall 21' facing to the first volume 14. Since liquids flowing from the volume enclosed by the first lid 21 flow along the walls of the tube or pipe 40 and the walls of the cartridge 42, the liquids will not come into contact with the inlet port of the calibrated one-way valve 24. To avoid that the level of liquids accumulating on the separating wall 21' may reach the height of the calibrated one-way valve' s 24 inlet port, the calibrated one-way valve 24 and the cartridge are preferably designed to form a space of sufficient capacity and height around the calibrated one-way valve 24. The outlet opening of the second chamber may in some embodiments further be formed by a U-pipe or the opening of a U-pipe having its exit side oriented upwardly. Finally, the cartridge 42 may be equipped with a fire arrester 26 located between the outlet port of the calibrated one-way valve 24 and the outlet opening 27 of the second chamber in much the same way as in the first embodiment.

The present invention provides an improved battery venting system for batteries using electrolytes, and in particular for lead acid batteries, minimizing, and even preventing, a contamination of a battery's exterior or near surroundings by liquids and gases escaping from the battery cells 12. The common concept linking the two embodiments described above is the separation of the inlet port of the calibrated one-way valve from where electrolyte components and gases having escaped the battery cells may accumulate. The present invention solves the problems common to conventional batteries, i.e., the contamination of the batteries outer surface with leaking acid, and the escape of gases via defective, faulty or inefficient seals of the battery valves and plugs.

## Claims

1. A battery system comprising a battery (10) and a battery venting system (20), the battery (10) comprising a case (11) providing several compartments with each compartment housing two electrodes immersed in an electrolyte to form a battery cell (12),
the battery venting system (20) comprising:
at least one check valve (16) for each cell (12) of the battery (10),
a first chamber (21, 13, 40, 42) enclosing a first volume (14),
a calibrated one-way valve (24), and
a second chamber (21') enclosing a second volume (50), the second volume (50) being separated from the first volume (14) by a separating wall (21') common to the first and second chambers,
whereby
each check valve (16) provides a fluid communication between its respective battery cell (12) and the first volume (14) to enable a fluid communication between the respective cell and the first volume when open and to seal the respective battery cell (12) when closed,
the calibrated one-way valve (24) is positioned in the separating wall (21') for providing a fluid communication between the first volume (14) and the second volume (50) when open, and for sealing the first volume (14) from the second volume (50) when closed,
the first chamber (21, 13, 40, 42) is continuously bonded to the case (11) of the battery (10) such that the first volume is hermetically sealed, when the check valves (16) and the calibrated one-way valve (24) are closed, and
the second chamber (21') has an outlet opening (27) providing the only fluid communication from the second volume (50) to the surrounding of the battery venting system (20) and the outside of the battery (10), with the second chamber being continuously bonded to the first chamber for providing, with the exception of the outlet opening (27), a hermetically sealed encasing for the second volume,
**characterized in that**
the second chamber (21') of the battery venting system (20) is located below the separating wall (21'), and
the inlet port of the calibrated one-way valve (24) is located above the surface of the separating wall (21') facing to the first volume (14).

2. The battery system according to claim 1, whereby the first chamber (21, 13) is configured as a lid to be attached to the top of the battery (10) in a gas tight manner and to cover at least the area provided for the check valves (16).

3. The battery system according to claim 2, whereby the first chamber (21, 13) is adapted for being bonded to the top of the battery (10) by gluing or welding.

4. The battery system according to any of the preceding claims, whereby each check valve (16) is biased in the closed position to open only when the pressure on the inlet port of the check valve (16) is higher than on the outlet port of the check valve.

5. The battery system according to claim 4, whereby the bias is implemented by mechanical, pneumatical or any other means.

6. The battery system according to any of the preceding claims, whereby the first chamber (21, 13, 42) comprises a first section (21, 13) and a second section (42), with the first section being in fluid communication with each check valve (16), the calibrated one-way valve (24) being located in the second section (42), and the second section being directly connected to the first section via an opening formed in the first section.

7. The battery system according to claim 6, whereby the second section is directly connected to the first section by use of a tube (40) or pipe (40).

8. The battery system according to claim 6 or 7, whereby the second chamber is positioned on the side of the first section of the first chamber.

9. The battery system according to claim 7 or 8, whereby the tube (40) or pipe (40) enters the first section (21, 13) of the first chamber (21, 13, 40, 42).

10. The battery system according to any of the preceding claims, whereby a flame arrester (26) is positioned in the second chamber between the calibrated one-way valve (24) and the outlet opening (27) such that any fluid passing from the outlet opening to the calibrated one-way valve has to pass through the flame arrester.

11. A battery system according to one of claims 1 to 10, further comprising an electronic control device (30) with a pressure sensor arranged for sensing a pressure inside the first volume, the electronic control device configured for generating a signal for controlling a charging current contingent upon the pressure sensed in the first volume by use of the pressure sensor.

## Patentansprüche

1. Batteriesystem mit einer Batterie (1) und einem Batterie-Belüftungs-System (20), wobei die Batterie ein Gehäuse (11) mit einigen Abteilungen aufweist, deren jede zwei in einen Elektrolyten getauchte Elektroden beherbergt, um eine Batteriezelle (12) zu bilden,
wobei das Batterie-Belüftungs-System (20) beinhaltet:
wenigstens ein Rückschlagventil (16) für jede Zelle (12) der Batterie (10), eine erste Kammer (21, 13, 40, 42), die ein erstes Volumen (14) einschließt, ein kalibriertes Einweg-Ventil (24), und
eine zweite Kammer (21'), die ein zweites Volumen (50) einschließt, wobei das zweite Volumen (50) vom ersten Volumen (14) durch eine Trennwand (21') abgetrennt ist, die der ersten Kammer und der zweiten Kammer gemeinsam ist,
wobei
jedes Rückschlagventil (16) eine Fluidverbindung zwischen seiner betreffenden Batteriezelle (12) und dem ersten Volumen (14) bereitstellt, um eine Fluidverbindung zwischen der betreffenden Zelle und dem ersten Volumen (14) zu ermöglichen, wenn es offen ist, und die betreffende Batteriezelle abzudichten, wenn es geschlossen ist,
das kalibrierte Einweg-Ventil (24) in der Trennwand (21') angeordnet ist, um eine Fluidverbindung zwischen dem ersten Volumen (14) und dem zweiten Volumen (50) bereitzustellen, wenn es offen ist, und das erste Volumen (14) gegenüber dem zweiten Volumen (50) abzudichten, wenn es geschlossen ist,
die erste Kammer (21, 13, 40, 42) durchgehend an das Gehäuse (11) der Batterie (10) gebondet ist, so dass das erste Volumen hermetisch abgeschlossen ist, wenn die Rückschlagventile (16) und das kalibrierte Einweg-Ventil (24) geschlossen sind, und
das zweite Volumen (21') eine Auslass-Öffnung (27) aufweist, die die einzige Fluidverbindung vom zweiten Volumen (50) zur Umgebung des Batterie-Belüftungs-Systems (20) darstellt, wobei die zweite Kammer durchgehend an die erste Kammer gebondet ist, um, mit der Ausnahme des Auslass-Öffnung (27) eine hermetisch abgeschlossene Einhausung für das zweite Volumen bereitzustellen,
**dadurch gekennzeichnet, dass**
die zweite Kammer (21') des Batterie-Belüftungs-Systems (20) unterhalb der Trennwand (21') angeordnet ist, und
die Eintrittsöffnung des kalibrierten Einweg-Ventils (24) oberhalb der dem ersten Volumen (14) zugewandten Oberfläche der Trennwand (21') angeordnet ist.

2. Batteriesystem gemäß Anspruch 1, wobei die erste Kammer (21, 13) als oben an der Batterie (10) gasdicht anzubringender Deckel konfiguriert ist, und wenigstens die für die Rückschlagventile (16) bereitgestellte Fläche abdeckt.

3. Batteriesystem gemäß Anspruch 2, wobei die erste Kammer (21, 13) dazu ausgebildet ist, oben an die Batterie (10) geklebt oder geschweißt zu werden.

4. Batteriesystem gemäß einem der voranstehenden Ansprüche, wobei jedes Rückschlagventil (16) zur geschlossenen Stellung vorgespannt ist, um sich nur zu öffnen, wenn der Druck auf die Eintrittsöffnung des Rückschlagventils (16) höher wird, als jener auf die Austrittsöffnung des Rückschlagventils.

5. Batteriesystem gemäß Anspruch 4, wobei die Vorspannung durch mechanische, pneumatische oder andere Mittel implementiert ist.

6. Batteriesystem gemäß einem der voranstehenden Ansprüche, wobei die erste Kammer (21, 13, 42) einen ersten Abschnitt (21, 13) und einen zweiten Abschnitt (42) aufweist, wovon der erste Abschnitt in Fluidverbindung mit jedem Rückschlagventil (16) steht, das kalibrierte Einweg-Ventil (24) im zweiten Abschnitt (42) angeordnet ist, und der zweite Abschnitt über eine im ersten Abschnitt gebildete Öffnung direkt mit dem ersten Abschnitt verbunden ist.

7. Batteriesystem gemäß Anspruch 6, wobei der zweite Abschnitt mittels eines Schlauchs (40) oder einer Röhre (40) direkt mit dem ersten Abschnitt verbunden ist.

8. Batteriesystem gemäß Anspruch 6 oder 7, wobei die zweite Kammer an der Seite des ersten Abschnitts der ersten Kammer angeordnet ist.

9. Batteriesystem gemäß Anspruch 7 oder 8, wobei der Schlauch (40) oder die Röhre (40) in den ersten Abschnitt (21, 13) der ersten Kammer (21, 13, 40, 42) eintritt.

10. Batteriesystem gemäß einem der voranstehenden Ansprüche, wobei eine Flammensperre (26) in der zweiten Kammer zwischen dem kalibrierten Einweg-Ventil (24) und der Austritts-Öffnung (27) derart angeordnet ist, dass jegliches von der Austritts-Öffnung zum kalibrierten Einweg-Ventil (24) tretende Fluid durch die Flammensperre (26) treten muss.

11. Batteriesystem gemäß einem der Ansprüche 1 bis 10, ferner aufweisend ein elektronisches Steuergerät (30) mit einem zum Erfassen eines Drucks innerhalb des ersten Volumens ausgebildeten Drucksensor, wobei das elektronische Steuergerät dazu ausgebildet ist, ein Signal zum Steuern eines Ladestroms zu erzeugen, das von dem mittels des Drucksensors erfassten Druck im ersten Volumen abhängt.

## Revendications

1. Système de batterie comprenant une batterie (10) et un système de ventilation de batterie (20),
la batterie (10) comprenant un boîtier (11) fournissant plusieurs compartiments avec chaque compartiment logeant deux électrodes immergées dans un électrolyte pour former une cellule de batterie (12),
le système de ventilation de batterie (20) comprenant :
au moins une soupape de non-retour (16) pour chaque cellule (12) de la batterie (10),
une première chambre (21, 13, 40, 42) renfermant un premier volume (14),
une soupape unidirectionnelle étalonnée (24), et
une seconde chambre (21') renfermant un second volume (50), le second volume (50) étant séparé du premier volume (14) par une paroi de séparation (21') commune aux première et seconde chambres,
selon lequel
chaque soupape de non-retour (16) fournit une communication fluidique entre son élément de batterie respectif (12) et le premier volume (14) pour permettre une communication fluidique entre la cellule respective et le premier volume lorsqu'elle est ouverte et pour sceller l'élément de batterie respectif (12) lorsqu'elle est fermée,
la soupape unidirectionnelle étalonnée (24) est positionnée dans la paroi de séparation (21') pour fournir une communication fluidique entre le premier volume (14) et le second volume (50) lorsqu'elle est ouverte, et pour sceller le premier volume (14) du second volume (50) lorsqu'elle est fermée,
la première chambre (21, 13, 40, 42) est liée en continu au boîtier (11) de la batterie (10) de telle sorte que le premier volume est scellé hermétiquement,
lorsque les soupapes de non-retour (16) et la soupape unidirectionnelle étalonnée (24) sont fermées, et
la seconde chambre (21') a une ouverture de sortie (27) fournissant l'unique communication fluidique du second volume (50) à l'environnement du système de ventilation de batterie (20) et l'extérieur de la batterie (10), la seconde chambre étant liée en continu à la première chambre pour fournir, à l'exception de l'ouverture de sortie (27), un boîtier fermé hermétiquement pour le second volume,
**caractérisé en ce que**
la seconde chambre (21') du système de ventilation de batterie (20) est située sous la paroi de séparation (21'), et
l'orifice d'entrée de la soupape unidirectionnelle étalonnée (24) est situé au-dessus de la surface de la paroi de séparation (21') faisant face au premier volume (14).

2. Système de batterie selon la revendication 1, selon lequel la première chambre (21, 13) est conçue comme un couvercle à fixer au sommet de la batterie (10) de manière étanche aux gaz et pour couvrir au moins la zone prévue pour les soupapes de non-retour (16).

3. Système de batterie selon la revendication 2, selon lequel la première chambre (21, 13) est adaptée pour être liée au sommet de la batterie (10) par collage ou soudage.

4. Système de batterie selon l'une quelconque des revendications précédentes, selon lequel chaque soupape de non-retour (16) est sollicitée dans la position fermée pour s'ouvrir uniquement lorsque la pression sur l'orifice d'entrée de la soupape de non-retour (16) est plus élevée que sur l'orifice de sortie de la soupape de non-retour.

5. Système de batterie selon la revendication 4, selon lequel la sollicitation est mise en oeuvre par un moyen mécanique, pneumatique ou tout autre moyen.

6. Système de batterie selon l'une quelconque des revendications précédentes, selon lequel la première chambre (21, 13, 42) comprend une première section (21, 13) et une seconde section (42), la première section étant en communication fluidique avec chaque soupape de non-retour (16), la soupape unidirectionnelle calibrée (24) étant située dans la seconde section (42), et la seconde section étant directement reliée à la première section par l'intermédiaire d'une ouverture formée dans la première section.

7. Système de batterie selon la revendication 6, selon lequel la seconde section est directement reliée à la première section au moyen d'un tube (40) ou d'un tuyau (40).

8. Système de batterie selon la revendication 6 ou 7, selon lequel la seconde chambre est positionnée sur le côté de la première section de la première chambre.

9. Système de batterie selon la revendication 7 ou 8, selon lequel le tube (40) ou le tuyau (40) entre dans la première section (21, 13) de la première chambre (21, 13, 40, 42).

10. Système de batterie selon l'une quelconque des revendications précédentes, selon lequel un arrête-flamme (26) est positionné dans la seconde chambre entre la soupape unidirectionnelle calibrée (24) et l'ouverture de sortie (27) de telle sorte que tout fluide passant de l'ouverture de sortie à la soupape unidirectionnelle étalonnée doit passer par l'arrête-flamme.

11. Système de batterie selon l'une des revendications 1 à 10, comprenant en outre un dispositif de commande électronique (30) avec un capteur de pression agencé pour détecter une pression à l'intérieur du premier volume, le dispositif de commande électronique étant configuré pour générer un signal pour commander un courant de charge en fonction de la pression détectée dans le premier volume par utilisation du capteur de pression.
